# EUROPEAN PATENT SPECIFICATION

(11) **EP 3 725 146 B1**
(45) Date of publication and mention of the grant of the patent: **06.12.2023**
(21) Application number: 20159961.0
(22) Date of filing: 28.02.2020
(51) Int. Cl.: A01D 34/00, B60B 11/02

(54) **AN ASSEMBLY OF TWO TYRES FOR SELF-PROPELLED LAWN MOWER ROBOTS**
ANORDNUNG VON ZWEI REIFEN FÜR SELBSTGETRIEBENE RASENMÄHERROBOTER
ENSEMBLE DE DEUX PNEUS POUR LES ROBOTS TONDEUSE À GAZON AUTOTRACTÉS

(30) Priority: 18.04.2019 IT 201900006044
(43) Date of publication of application: 21.10.2020
(73) Proprietor: Bernini, Fabrizio, 52021 Bucine - Arezzo (IT)
(72) Inventor: Bernini, Fabrizio, 52021 Bucine - Arezzo (IT)
(74) Representative: Milli, Simone

(56) References cited:
- EP-A1- 2 241 172
- WO-A1-03/070454
- US-A- 2 635 012
- US-A- 3 068 049
- US-A- 3 953 075

## Description

This invention relates to the technical sector of automatic gardening devices.

In particular, the invention relates to a tyre for a self-propelled lawn mower robot.

The lawn mower devices are normally used to keep lawns, gardens and grassy areas in general in optimum conditions, that is to say, for keeping the grass below a certain height in a substantially homogeneous manner over the entire cutting area.

There are prior art self-propelled lawn mower robots which are moved by wheels, which are connected to a suitable motor designed to rotate them, promoting in this way the movement of the robot.

However, the Applicant has observed that the movement devices of known type have drawbacks, which adversely affect the correct movement of the robot and consequently reduce, even significantly, the efficiency in the performance of the operations for maintenance of the turf.

In particular, prior art devices use wheels, either full or rigid, which adapt poorly to operating inside work areas which have irregular surfaces, in particular if there are small obstacles on these surfaces.

The expression "small obstacles" includes all those objects or irregularities present inside the work area on which the robot can pass without detecting the need to change its forward direction.

By way of example, small obstacles may be considered as: small stones, small sticks, small piles of soil or small holes.

In these situations the impact with the obstacle could in any case cause the loss of adhesion with the ground or even an overturning of the robot.

In this context, the technical purpose which forms the basis of the invention is to provide an assembly of two tyres for a lawn mower robot which overcomes at least some of the above-mentioned drawbacks of the prior art.

In particular, the aim of the invention is to provide a tyre for self-propelled lawn mower robots which is able to operate in an efficient and reliable manner even on uneven or not perfectly regular ground, in particular maintaining a correct adhesion with the ground.

Similar tyres are described in patent applications WO03/070454(A1), US3068049(A) and WO2005/030504(A1).

However, in all these prior art documents, the tyre has problems of adherence to the ground in some situations.

The technical purpose indicated and the aims specified are substantially achieved by a tyre for a lawn mower robot comprising the technical features described in one or more of the appended claims.

The invention describes an assembly of two tyres for self-propelled lawn mower robots which comprises for each of said two tyres an outer annular portion and an inner annular portion.

The outer annular portion defines a tyre tread and has a cross section, in a radial plane, extending mainly along a direction substantially parallel to an axis of rotation of the tyre.

The inner annular portion, configured for coupling the tyre to a rim, is positioned at a mid-plane of the outer annular portion.

Moreover, the inner annular section has a cross-section, in a radial plane, which extends mainly along a direction substantially perpendicular to the axis of rotation of the tyre.

Advantageously, this particular shape provides the tyre with a considerable flexibility and capacity for adapting to the profile of the ground on which the robot slides, allowing it to maintain an optimum adherence irrespective of any roughness or irregularities of the ground.

The invention also relates to a wheel which comprises an assembly of two tyres according to this invention and a rim coupled to the tyre at its inner annular portion.

The invention also relates to a self-propelled lawn mower robot which comprises a frame, movement means and cutting means.

The movement means are associated with the frame for guiding it along a feed trajectory, the cutting means are also associated with the frame and are also configured for cutting a turf present along the feed trajectory.

Moreover, the movement means comprise a motor; a main wheel coupled to a power pick-up of the motor; at least one auxiliary wheel which can be coupled to the main wheel to receive from it a mechanical power and coupling means configured to stably constrain the at least one auxiliary wheel to the main wheel, in such a way that the auxiliary wheel is rotationally integral with the main wheel.

At least one of the wheels of the robot comprises a wheel according to the invention.

Advantageously, the robot is designed to be fitted, using its movement means, a variable number of wheels in such a way as to exactly follow the surface of contact with the ground, thereby improving the traction if necessary.

The main wheel and/or the at least one auxiliary wheel is a wheel comprising the assembly of two tyres according to the invention.

The dependent claims, incorporated herein for reference, relate to different embodiments of the invention.

Further features and advantages of this invention are more apparent in the detailed description below, with reference to a preferred, non-restricting, embodiment of a tyre for a self-propelled lawn mower robot as illustrated in the accompanying drawings, in which:

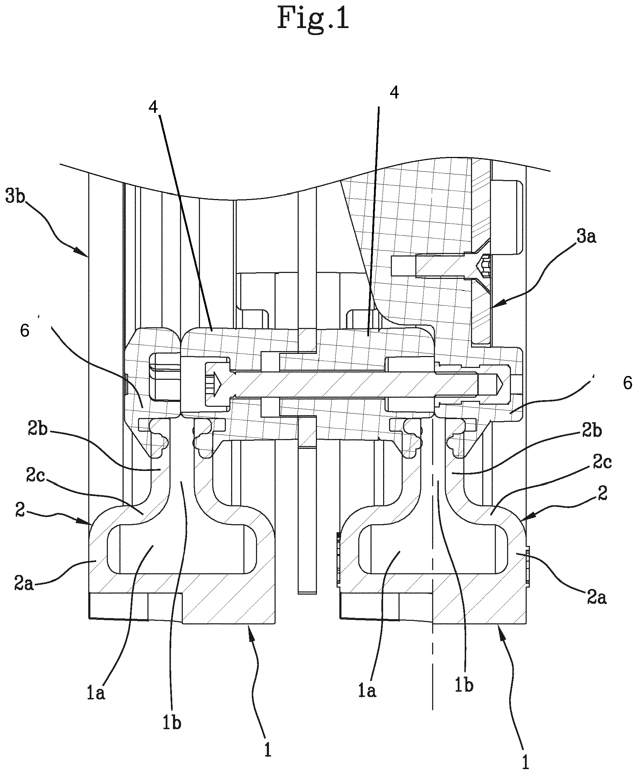

- Figure 1 shows a radial cross-section of a pair of tyres according to the invention applied on respective rims;
- Figure 2 shows a possible embodiment of a movement device for self-propelled lawn mower robots according to the invention;
- Figure 3 shows an exploded view of the device illustrated in Figure 2.

In the accompanying drawings the numeral 1 denotes an assembly of two tyres for a self-propelled lawn mower robots.

Each of the tyres comprises an outer annular portion 1a and an inner annular portion 1b.

The outer annular portion 1a defines the tread of the tyre, that is to say, it is configured to engage with the ground.

Moreover, the outer annular portion 1a has a cross-section, in a radial plane, extending mainly along a direction substantially parallel to an axis of rotation "X" of the tyre "1".

The annular inner portion 1b is, on the other hand, configured to be able to couple the tyre 1 to a rim when it is mounted on a wheel 3.

The inner annular portion 1b is positioned at a mid-plane "M" of the outer annular portion 1a and has a cross-section, in a radial plane, which extends mainly along a direction substantially perpendicular to the axis of rotation "X" of the tyre 1.

In other words, the tyre has a substantially T-shaped radial cross-section, wherein the horizontal arms are defined by the outer annular portion 1a, which has the tread designed to engage the ground and the central rod is defined by the inner annular portion 1b which allows the tyre 1 to be constrained to a rim 4.

More in detail, the tyre 1 has a pair of shoulders 2, each of which is substantially S-shaped and which comprises a first portion 2a, a second portion 2b and a third portion 2c.

The first portion 2a extends in a substantially perpendicular manner relative to the axis of rotation "X" of the tyre 1 and delimits laterally the outer annular portion 1a.

The second portion 2b extends in a substantially perpendicular manner relative to the axis of rotation "X" of the tyre 1 and delimits laterally the inner annular portion 1b.

The third portion 2c, on the other hand, extends in a substantially parallel manner to the axis of rotation "X" of the tyre 1 and acts as a connector between the first portion 2a and the second portion 2b, forming also partly a wall of the outer annular portion 1a, in particular a wall facing the rim 4. Advantageously, the distance between the second portions 2b of the pair of shoulders 2 is less than 30% of the distance between the first portions 2a of the same pair of shoulders 2.

It follows that the width of the outer annular portion 1a is significantly greater than the width adopted by the tyre 1 at the inner annular portion 1b.

In this way, a shoulder 2 is obtained in its entirety which is extremely soft, allowing a significant deformation of the outer annular portion 1a.

In this way, the tyre tread can easily be deformed in such a way as to adapt to the profile of the surface on which the device 10 slides and keep contact with that surface at all times.

In particular, in the presence of small obstacles, the tyre 1 is able to deform suitably in such a way as to follow the profile of the obstacle without a raising of the robot from the ground.

Moreover, the particular shape of the tyre 1 means that during use the portion of tyre 1 in contact with the ground deforms to adapt to the profile of the surface on which it is sliding, and then returns elastically to its original shape once it loses contact with the ground, in particular following a gradual rotation of the wheel to which it is applied.

The passage from the deformed shape to the original one generates a pulse which allows detachment of any residue, muddy in particular, or detritus, for example small stones or branches, which may remain attached to that particular portion of tyre 1 when the robot on which it is mounted has passed above it.

In this way it is possible to guarantee that the tyre 1 remains clean, thus preventing the accumulation of dirt which could reduce the gripping capacity on the ground.

Advantageously, the assembly of two tyres 1 according to the invention makes it possible to overcome the drawbacks present in the prior art, making it possible to optimise the efficiency of the self-propelled lawn mower robot to which it is applied, adapting it to operate in the best way as a function of the specific ambient characteristics of the work area.

This result is obtained by introducing a tyre having a considerable flexibility which allows it to adapt and follow the profile of the surface on which it is rotated.

The invention also relates to a wheel 3 which comprises a rim 4 and an assembly of two tyres 1, the latter being preferably made of rubber.

In particular, each of the two tyres 1 has the technical features indicated above and is coupled to the rim 4 by its inner annular portion 1b.

Depending on the technical specifications of the robot to which the device 10 will be applied it is also possible that each of the two tyres 1 of each wheel is pressurised, preferably at a pressure at least equal to an atmospheric pressure.

Advantageously, the wheel 3 according to the invention may be applied to a lawn mower robot of known type to make it suitable to operate correctly on any type of ground, also and in particular on ground having unevenness and irregularities.

The invention also relates to a self-propelled lawn mower robot.

The expression "self-propelled lawn mower robot" means a robot movable in a substantially autonomous manner inside a work area to perform an operation for cutting turf present inside the area, in particular following a predetermined feed trajectory.

The robot comprises a frame, a motor, a wheel according to the invention and cutting means.

The frame is made, for example, of a semi-rigid material, preferably plastic, and is shaped to support the various components which form part of the robot.

The cutting means are also associated with the frame and configured for performing a cutting operation of turf present along the feed trajectory.

In particular, the cutting means may comprise one or more cutting blades which can be rotated, for example by means of a further power pick-up of the same motor which activates the movement device 10.

The movement means are mounted on the frame, in such a way as to move the robot inside the working area, in particular along the feed trajectory.

In particular, the movement means comprise a motor and a main wheel 3a coupled to a power pick-up of the motor.

By way of example, the motor may be of the electric type, powered by a battery; the latter may be of the rechargeable type.

In other words, the main wheel 3a can be directly coupled to a power pick-up of a motor, by the action of which it is rotated determining the movement of the robot inside the work area.

In particular, the main wheel 3a is a wheel 3 made according to the invention, that is to say, it comprises an assembly of two tyres having the technical features described above.

Preferably, the recharging of the robot, which occurs at a fixed station or recharging base, is achieved by electrical coupling, in particular of the inductive type.

Preferably, the battery may also power other electrical/electronic devices provided on the lawn mower robot such as means for executing the cutting operation.

Moreover, the robot comprises at least one auxiliary wheel 3b, also preferably made according to the above-mentioned technical specifications.

The at least one auxiliary wheel 3b can be coupled to the main wheel 3a for receiving from it a mechanical power.

For this reason, the main wheel 3a may be connected directly, for example by means of a transmission shaft or a similar system, with a power pick-up of the motor of the robot in such a way as to be rotated by the latter, whilst the at least one auxiliary wheel 3b is configured to be fixed integrally to the main wheel 3a to be rotated together with it when it is rotated by the motor.

In other words, the at least one auxiliary wheel 3b is not connected directly to the power pick-up of the motor, but by means of the main wheel 3a which therefore acts as a unit for transmitting motion from the power pick-up to the at least one auxiliary wheel 3b.

Advantageously, it is possible to couple to the main wheel 3a a plurality of auxiliary wheels 3b, in this way increasing the overall surface of contact with the ground of the device 10.

In this way it is possible to modify the adherence and adherence properties of the robot depending on the particular operating conditions of the work area inside of which it must be moved.

For example, in the presence of muddy or wet ground, in which it is necessary to have a greater traction, it is possible to apply a plurality of auxiliary wheels 3b to the main wheel 3a, increasing the surface for contact with the ground until eliminating the risk of sliding of the wheels 3a, 3b.

Again by way of an example, in the presence, on the other hand, of more stable ground, in which a smaller surface of adhesion with the ground is sufficient to guarantee the correct movement of the robot, it is possible to reduce the number of auxiliary wheels 3b applied, until also leaving solely applied the main wheel 3a, reducing in this way the power required from the motor to rotate them.

In this way it is possible to adapt the robot to the conditions of the ground in which it is to operate, if these change locally or over time, simply by varying the number of auxiliary wheels 3b applied, modulating in this way the dimension of the surface of contact with the ground of the device 10. The device also comprises coupling means 5 configured for securely fixing the at least one auxiliary wheel 3b to the main wheel 3a.

In particular, the coupling means 5 allow the wheels 3a, 3b to be fixed to each other in such a way that the at least one auxiliary wheel 3b is rotationally integral with the main wheel 3a.

In this way, only the main wheel must be connected to the power pick-up of the motor, whilst the auxiliary wheels 3b can all be connected solely to the main wheel 3a, either directly or by means of further auxiliary wheels 3b, to be rotated together with it.

In this way, it is possible to apply a variable number of auxiliary wheels 3b since irrespective of the number of auxiliary wheels 3b applied it is not necessary to modify the characteristics of the power pick-up of the motor since the latter always remains connected directly to the main wheel 3a and need not be modified to fit the auxiliary wheels 3b.

Preferably, the coupling means 5 are applied at a peripheral portion of the at least one auxiliary wheel 3b and of the main wheel 3a.

In this way, it is possible to couple the main wheel 3b to the motor by means of a transmission shaft, coaxial with the axis of rotation "X" of the wheels 3a, 3b, avoiding the risk of interference with the coupling means 5. According to a particular embodiment, both the main wheel 3a and each auxiliary wheel 3b have a plurality of through seats threaded internally and positioned in such a way that each through seat of the main wheel 3a can face a respective through seat of the auxiliary wheel 3b, and said coupling means 5 comprise a plurality of screws which can be screwed in the through seats.

In particular, each auxiliary wheel 3b will have a first plurality of through seats, so that it can be connected to the main wheel 3a using the coupling means 5 (or to an auxiliary wheel 3b already applied to the main wheel 3a), and a second plurality of through seats so that it can be constrained to any further auxiliary wheel 3b.

Alternatively, each auxiliary wheel 3b and the main wheel 3a have only a plurality of through seats in which screws of different length can be inserted depending on the number of auxiliary wheels 3b which are applied to the main wheel 3a.

Preferably, the through seats are positioned radially and equidistant from each other about the axis of rotation "X" of the wheels 3a, 3b.

The device also comprises a protective eleemnt 6 applicable to an auxiliary wheel 3b or to the main wheel 3a.

In particular, the protective element 6 may be applied to the outermost main wheel 3a, 3b, that is, the one furthest from the motor, in a relative lateral surface, that is to say, a surface perpendicular to its axis of rotation "X", directly facing the working area.

More specifically, the protective element 6 is configured to cover at least those portions of the lateral surface of the wheels 3a, 3b in which the connecting means 5 are applied or applicable.

If, for example, two auxiliary wheels 3b are applied to the main wheel 3a, the protective element will be applied to the auxiliary wheel 3b furthest from the main wheel 3a and on a relative lateral surface directly facing the working area.

According to a particular embodiment, the device 10 comprises at least one drive wheel 7 configured to further improve the traction which can be obtained from the device 10.

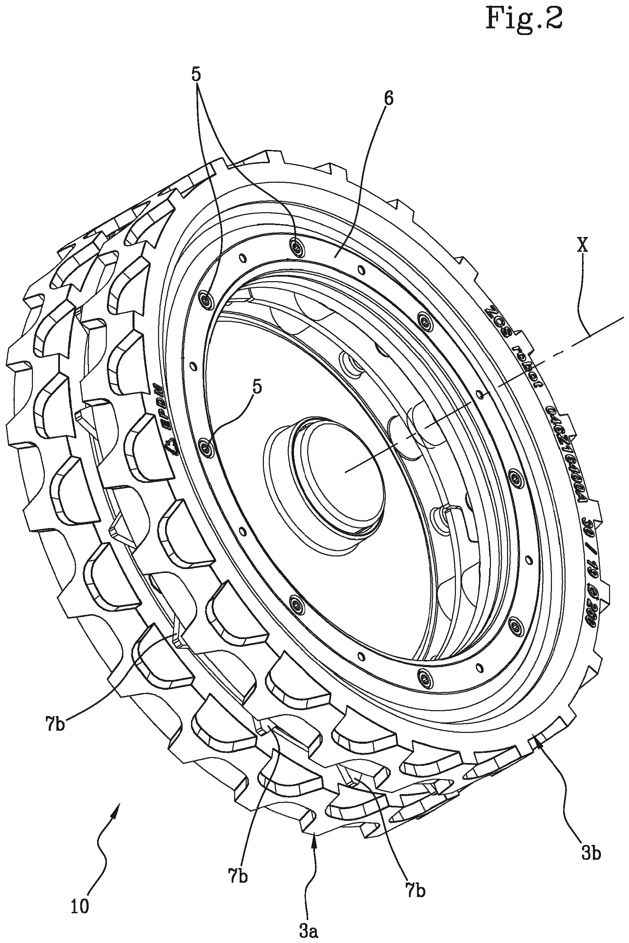

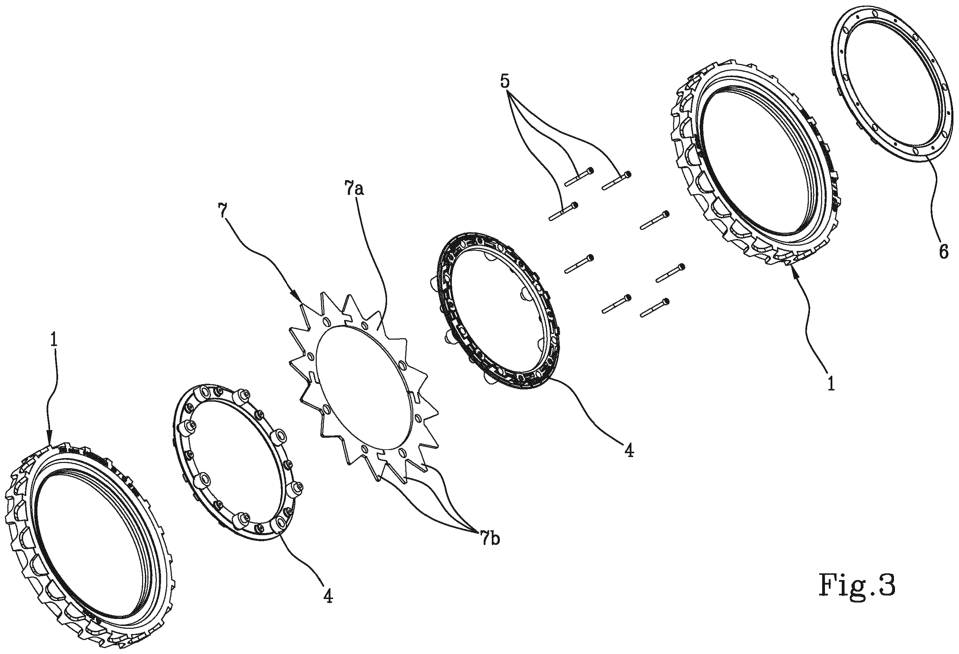

In particular, the drive wheel 7 comprises a main body 7a having a substantially circular shape and a plurality of drive fingers 7b, which extend radially away from the main body 7a in such a way as to be configured to engage with the ground on which the drive wheel 7 slides. As may be seen in the accompanying drawings, Figures 2 and 3 in particular, the drive fingers 7b are positioned circumferentially and equidistant from each other around the main body 7a in such a way as to guarantee a homogeneous and constant improvement of the traction which can be supplied by the device 10.

Preferably, the at least one drive wheel 7 is configured to be interposed between the main wheel 3a and an auxiliary wheel 3b adjacent to it or between adjacent auxiliary wheels 3b.

In other words, the drive wheel is particularly suitable for being interposed between adjacent wheels 3a, 3b, but without excluding that it can be applied to the main wheel 3a even if no auxiliary wheel 3b is actually applied.

Similarly, it is possible to apply a plurality of drive wheels 7 between each pair of adjacent wheels 3a, 3b, further applying a drive wheel 7 also outside the last auxiliary wheel 3b, that is to say, in such a way that the drive wheel 7 is directly facing the outside environment.

Advantageously, the robot according to the invention is particularly efficient in operating in a wide variety of situations, since its movement means can be easily and quickly adapted to adapt to the specific conditions of the ground on which the robot must perform the cutting operation.

## Claims

1. An assembly of two tyres (1) for self-propelled lawn mower robots comprising:
- an outer annular portion (1a) defining a tyre tread (1) and having a cross section in a radial plane extending mainly along a direction substantially parallel to an axis of rotation (X) of the tyre (1);
- an inner annular portion (1b) configured to couple the tyre (1) to a rim (4) and positioned at a mid-plane of the outer annular portion (1a), said inner annular portion (1b) having a cross section in a radial plane extending mainly along a direction substantially perpendicular to said axis of rotation (X) of the tyre (1);
- a pair of shoulders (2), each of said shoulders (2) having a cross section substantially in the shape of an 'S', said cross section comprising:
- a first portion (2a) substantially perpendicular to the axis of rotation (X) of the tyre (1) and designed to laterally delimit the outer annular portion (1a);
- a second portion (2b) substantially perpendicular to the axis of rotation (X) of the tyre (1) and designed to laterally delimit the inner annular portion (1b);
- a third portion (2c) substantially parallel to the axis of rotation (X) of the tyre (1) and designed to join the first portion (2a) with the second portion (2b);
**characterised in that**
the distance between the second portions (2b) of said pair of shoulders (2) is less than 30% of the distance between the first portions (2a) of said pair of shoulders (2).

2. The assembly (1) according to the preceding claim, wherein each tyre (1) is made from rubber.

3. A wheel for self-propelled lawn mower robot comprising an assembly of two tyres (1) according to any one of the preceding claims and a rim (4) coupled to each of said tyres (1) respectively at the inner annular portion (1b).

4. The wheel according to claim 3, wherein each tyre (1) is pressurised, preferably at a pressure at least equal to an atmospheric pressure.

5. A self-propelled lawn mower robot comprising:
- a frame;
- a motor;
- a main wheel (3a) made in accordance with claim 3 and coupled to a power pick-up of the motor;
- cutting means associated with the frame and configured for performing a cutting operation of turf present along the feed trajectory.

6. The robot according to claim 5, comprising:
- at least one auxiliary wheel (3b), preferably made in accordance with claim 5, which can be coupled to the main wheel (3a) to receive from said main wheel (3a) a mechanical power;
- coupling means (5) configured for securely fixing the at least one auxiliary wheel (3b) to said main wheel (3a), in such a way that the at least one auxiliary wheel (3b) is rotationally integral with the main wheel (3a).

7. The robot according to claim 6, wherein the coupling means (5) are applicable at a peripheral portion of the at least one auxiliary wheel (3b) and of the at least one main wheel (3a).

8. The robot according to claim 6 or 7, wherein the main wheel (3a) and the auxiliary wheel (3b) have a plurality of through seats threaded internally and positioned in such a way that each through seat of the main wheel (3a) can face a respective through seat of the auxiliary wheel (3b), preferably said coupling means (5) comprising a plurality of screws which can be screwed in said through seats.

9. The robot according to any one of claims 6 to 9, comprising a protective element (5) which can be coupled to a lateral surface of the auxiliary wheel (3b) or of the main wheel (3a) facing directly toward a working area of the lawn mower robot, in such a way as to cover at least partly said surface.

10. The robot according to any one of claims 5 to 9, comprising a drive wheel (7), said wheel having a main body (7a) substantially circular and a plurality of drive fingers (7b) extending radially away from said main body (7a).

11. The robot according to claim 10, wherein said drive wheel (7) is configured to be interposed between the main wheel (3a) and an auxiliary wheel (3b) adjacent to said main wheel (3a) or between adjacent auxiliary wheels (3b).

12. The robot according to claim 10 or 11, wherein said drive fingers (7b) are arranged circumferentially and equidistant from each other about the main body (7a).

## Patentansprüche

1. Anordnung von zwei Reifen (1) für selbstgetriebene Rasenmäherroboter, umfassend:
- einen äußeren ringförmigen Abschnitt (1a), definierend einen Reifenwulst (1) und aufweisend einen Querschnitt in einer radialen Ebene, die sich hauptsächlich entlang einer Richtung erstreckt, die im Wesentlichen parallel zu einer Rotationsachse (X) des Reifens (1) verläuft;
- einen inneren ringförmigen Abschnitt (1b), der ausgebildet ist, um den Reifen (1) mit einer Felge (4) zu kuppeln, und der an einer Mittelebene des äußeren ringförmigen Abschnitts (1a) positioniert ist, wobei der innere ringförmige Abschnitt (1b) einen Querschnitt in einer radialen Ebene aufweist, der sich hauptsächlich entlang einer Richtung erstreckt, die im Wesentlichen rechtwinkelig zur Rotationsachse (X) des Reifens (1) verläuft;
- ein Paar Schultern (2), wobei eine jede der Schultern (2) einen Querschnitt aufweist, der im Wesentlichen die Form eines "S" aufweist, wobei dieser Querschnitt Folgendes umfasst:
- einen ersten Abschnitt (2a), der im Wesentlichen rechtwinkelig zur Rotationsachse (X) des Reifens (1) angeordnet und ausgelegt ist, um den äußeren ringförmigen Abschnitt (1a) seitlich zu begrenzen;
- einen zweiten Abschnitt (2b), der im Wesentlichen rechtwinkelig zur Rotationsachse (X) des Reifens (1) angeordnet und ausgelegt ist, um den inneren ringförmigen Abschnitt (1b) seitlich zu begrenzen;
- einen dritten Abschnitt (2c), der im Wesentlichen parallel zur Rotationsachse (X) des Reifens (1) angeordnet und ausgelegt ist, um den ersten Abschnitt (2a) mit dem zweiten Abschnitt (2b) zusammenzufügen, **dadurch gekennzeichnet, dass**
der Abstand zwischen den zweiten Abschnitten (2b) des Paars von Schultern (2) geringer als 30 % des Abstands zwischen den ersten Abschnitten (2a) des Paars von Schultern (2) ist.

2. Anordnung (1) nach dem vorhergehenden Anspruch, wobei ein jeder Reifen (1) aus Kautschuk besteht.

3. Rad für selbstgetriebenen Rasenmäherroboter, umfassend eine Anordnung von zwei Reifen (1) nach einem der vorhergehenden Ansprüche und eine Felge (4), die mit einem jeden der Reifen (1) jeweils am inneren ringförmigen Abschnitt (1b) gekuppelt ist.

4. Rad nach Anspruch 3, wobei ein jeder Reifen (1) mit Druck beaufschlagt ist, vorzugsweise bei einem Druck, der mindestens gleich dem atmosphärischen Druck ist.

5. Selbstgetriebener Rasenmäherroboter, umfassend:
- einen Rahmen;
- einen Motor;
- ein Hauptrad (3a), das im Einklang mit Anspruch 3 gefertigt und mit einem Leistungsaufnehmer des Motors gekuppelt ist;
- Schneidmittel, die mit dem Rahmen assoziiert und ausgebildet sind, um einen Schneidvorgang von Rasen, der sich entlang der Zuführungsbahn befindet, durchzuführen.

6. Roboter nach Anspruch 5, umfassend:
- mindestens ein Hilfsrad (3b), das vorzugsweise im Einklang mit Anspruch 5 gefertigt ist, das mit dem Hauptrad (3a) gekuppelt werden kann, um vom Hauptrad (3a) mechanische Kraft zu erhalten;
- Kupplungsmittel (5), die ausgebildet sind, um das mindestens eine Hilfsrad (3b) sicher am Hauptrad (3a) zu fixieren, sodass das mindestens eine Hilfsrad (3b) rotatorisch fest mit dem Hauptrad (3a) verbunden ist.

7. Roboter nach Anspruch 6, wobei die Kupplungsmittel (5) an einem Umfangsabschnitt des mindestens einen Hilfsrads (3b) und des mindestens einen Hauptrads (3a) angebracht werden können.

8. Roboter nach Anspruch 6 oder 7, wobei das Hauptrad (3a) und das Hilfsrad (3b) eine Vielzahl von Durchführungssitzen aufweisen, die innenseitig mit einem Gewinde versehen und so positioniert sind, dass ein jeder Durchführungssitz des Hauptrads (3a) einem jeweiligen Durchführungssitz des Hilfsrads (3b) zugewandt sein kann, wobei die Kupplungsmittel (5) vorzugsweise eine Vielzahl von Schrauben umfassen, die in die Durchführungssitze eingeschraubt werden können.

9. Roboter nach einem der Ansprüche 6 bis 9, umfassend ein Schutzelement (5), das mit einer seitlichen Oberfläche des Hilfsrads (3b) oder des Hauptrads (3a) gekuppelt werden kann, die direkt einem Arbeitsbereich des Rasenmäherroboters zugewandt ist, sodass mindestens ein Teil der Oberfläche bedeckt wird.

10. Roboter nach einem der Ansprüche 5 bis 9, umfassend ein Antriebsrad (7), wobei das Rad einen Hauptkörper (7a) aufweist, der im Wesentlichen kreisförmig ist, und eine Vielzahl von Antriebsfingern (7b), die sich radial wegführend vom Hauptkörper (7a) erstrecken.

11. Roboter nach Anspruch 10, wobei das Antriebsrad (7) ausgebildet ist, um zwischen dem Hauptrad (3a) und einem Hilfsrad (3b), das an das Hauptrad (3a) angrenzt, oder zwischen angrenzenden Hilfsrädern (3b) eingesetzt zu werden.

12. Roboter nach Anspruch 10 oder 11, wobei die Antriebsfinger (7b) umfangseitig und gleich beabstandet voneinander um den Hauptkörper (7a) angeordnet sind.

## Revendications

1. Ensemble de deux pneus (1) pour les robots tondeuse à gazon autotractés, comprenant :
- une portion annulaire externe (1a) définissant une bande de roulement (1) et ayant une section transversale dans un plan radial s'étendant principalement le long d'une direction substantiellement parallèle à un axe de rotation (X) du pneu (1) ;
- une portion annulaire interne (1b) configurée pour coupler le pneu (1) à une jante (4) et positionnée au niveau d'un plan médian de la portion annulaire externe (1a), ladite portion annulaire interne (1b) ayant une section transversale dans un plan radial s'étendant principalement le long d'une direction potentiellement perpendiculaire audit axe de rotation (X) du pneu (1) ;
- une paire d'épaulements (2), chacun desdits épaulements (2) ayant une section transversale substantiellement en forme de « S », ladite section transversale comprenant :
- une première portion (2a) substantiellement perpendiculaire à l'axe de rotation (X) du pneu (1) et conçue pour délimiter latéralement la portion annulaire externe (1a) ;
- une deuxième portion (2b) substantiellement perpendiculaire à l'axe de rotation (X) du pneu (1) et conçue pour délimiter latéralement la portion annulaire interne (1b) ;
- une troisième portion (2c) substantiellement parallèle à l'axe de rotation (X) du pneu (1) et conçue pour joindre la première portion (2a) à la deuxième portion (2b) ;
**caractérisé en ce que**
la distance entre les deuxièmes portions (2b) de ladite paire d'épaulements (2) est inférieure à 30 % de la distance entre les premières portions (2a) de ladite paire d'épaulements (2).

2. Ensemble (1) selon la revendication précédente, dans lequel chaque pneu (1) est fabriqué à partir de caoutchouc.

3. Roue pour robot tondeuse à gazon autotracté, comprenant un ensemble de deux pneus (1) selon l'une quelconque des revendications précédentes et une jante (4) couplée à chacun desdits pneus (1) respectivement au niveau de la portion annulaire interne (1b).

4. Roue selon la revendication 3, dans laquelle chaque pneu (1) est pressurisé, de préférence à une pression au moins égale à une pression atmosphérique.

5. Robot tondeuse à gazon autotracté, comprenant :
- un cadre ;
- un moteur ;
- une roue principale (3a) réalisée conformément à la revendication 3 et couplée à une prise de force du moteur ;
- des moyens de coupe associés au cadre et configurés pour effectuer une opération de coupe du gazon présent le long de la trajectoire d'alimentation.

6. Robot selon la revendication 5, comprenant :
- au moins une roue auxiliaire (3b), de préférence réalisée conformément à la revendication 5, qui peut être couplée à la roue principale (3a) pour recevoir de ladite roue principale (3a) une puissance mécanique ;
- des moyens de couplage (5) configurés pour fixer solidement ladite au moins une roue auxiliaire (3b) à ladite roue principale (3a), de manière à ce que ladite au moins une roue auxiliaire (3b) soit solidaire en rotation de la roue principale (3a).

7. Robot selon la revendication 6, dans lequel les moyens de couplage (5) sont applicables au niveau d'une portion périphérique de la au moins une roue auxiliaire (3b) et de la au moins une roue principale (3a).

8. Robot selon la revendication 6 ou 7, dans lequel la roue principale (3a) et la roue auxiliaire (3b) ont une pluralité de sièges traversants filetés intérieurement et positionnés de manière à ce que chaque siège traversant de la roue principale (3a) puisse faire face à un siège traversant respectif de la roue auxiliaire (3b), de préférence lesdits moyens de couplage (5) comprenant une pluralité de vis qui peuvent être vissées dans lesdits sièges traversants.

9. Robot selon l'une quelconque des revendications 6 à 9, comprenant un élément de protection (5) qui peut être couplé à une surface latérale de la roue auxiliaire (3b) ou de la roue principale (3a) tournée directement vers une zone de travail du robot tondeuse à gazon, de manière à recouvrir au moins partiellement ladite surface.

10. Robot selon l'une quelconque des revendications 5 à 9, comprenant une roue d'entraînement (7), ladite roue ayant un corps principal (7a) substantiellement circulaire et une pluralité de doigts d'entraînement (7b) s'étendant radialement à distance dudit corps principal (7a).

11. Robot selon la revendication 10, dans lequel ladite roue d'entraînement (7) est configurée pour être interposée entre la roue principale (3a) et une roue auxiliaire (3b) adjacente à ladite roue principale (3a) ou entre des roues auxiliaires adjacentes (3b).

12. Robot selon la revendication 10 ou 11, dans lequel lesdits doigts d'entraînement (7b) sont agencés circonférentiellement et équidistants les uns des autres autour du corps principal (7a).
